# FASCICULE DE BREVET EUROPEEN

(11) **EP 3 833 985 B1**
(45) Date de publication et mention de la délivrance du brevet: **19.04.2023**
(21) Numéro de dépôt: 19733416.2
(22) Date de dépôt: 14.06.2019
(51) Int. Cl.: G01P 13/04, B60T 7/12, B60W 30/18, B60W 40/10, B60W 40/105

(54) **PROCEDE DE DETERMINATION D'UN CHANGEMENT DE SENS DE DEPLACEMENT D'UN VEHICULE, ET VEHICULE ASSOCIE**
VERFAHREN ZUR BESTIMMUNG EINER FAHRTRICHTUNGSÄNDERUNG EINES FAHRZEUGS UND ZUGEHÖRIGES FAHRZEUG
METHOD FOR DETERMINING A CHANGE IN THE DIRECTION OF TRAVEL OF A VEHICLE AND ASSOCIATED VEHICLE

(30) Priorité: 14.06.2018 FR 1855219
(43) Date de publication de la demande: 16.06.2021
(73) Titulaire: Renault s.a.s, 92100 Boulogne Billancourt (FR); NISSAN MOTOR CO., LTD., Yokohama-shi, Kanagawa 221-0023 (JP)
(72) Inventeur: DAVINS-VALLDAURA, Joan, 78150 LE CHESNAY (FR); LEMIERE, Paul, 61230 GACE (FR); SENE, Pape-Abdoulaye, 78000 VERSAILLES (FR); DEBORNE, Renaud, 78150 LE CHESNAY (FR)
(74) Mandataire: Renault Group
(86) Numéro de dépôt international: PCT/EP2019/065662
(87) Numéro de publication internationale: WO 2019/238916

(56) Documents cités:
- DE-A1-102005 016 110
- DE-A1-102007 003 013
- DE-A1-102017 003 442
- US-A1- 2010 185 361
- US-B1- 8 965 691

## Description

### DOMAINE TECHNIQUE AUQUEL SE RAPPORTE L'INVENTION

La présente invention concerne de manière générale le domaine de la détermination du sens de déplacement d'un véhicule automobile.

Elle concerne plus particulièrement un procédé de détermination d'un changement de sens de déplacement d'un véhicule comprenant plusieurs roues et au moins deux capteurs de rotation associés chacun respectivement à l'une desdites roues, chaque capteur de rotation comprenant :
- une couronne annulaire pourvue d'une pluralité de repères, répartis le long de la circonférence de la couronne en étant décalés angulairement les uns par rapport aux autres, et
- un élément de détection devant lequel lesdits repères passent successivement lors d'un déplacement du véhicule et qui délivre un signal qui, au cours du temps, présente un motif caractéristique à chaque passage de l'un desdits repères devant l'élément de détection.

Elle concerne également un véhicule automobile dans lequel un tel procédé est mis en oeuvre.

### ARRIERE-PLAN TECHNOLOGIQUE

Il est connu d'équiper chaque roue d'un véhicule automobile avec un capteur de rotation tel que décrit ci-dessus, ce qui permet de déterminer la vitesse de rotation de cette roue (sur la base du nombre de motifs par seconde présentés par le signal que délivre par le capteur de rotation).

Pour de nombreuses applications d'aide à la conduite, il est utile en outre de connaitre le sens de rotation des roues ou le sens de déplacement du véhicule.

A titre d'exemple, lorsque la circulation est très encombrée, le véhicule effectue de nombreux déplacements de petite amplitude pouvant s'accompagner de légers reculs du véhicule dus à la pente de la route, qu'il est généralement souhaitable d'éviter. Dans un système de pilotage autonome en situation de circulation encombrée, il est donc particulièrement utile de disposer d'une information relative au sens de déplacement du véhicule, afin de pouvoir limiter de tels reculs.

Disposer d'une information relative au sens de déplacement du véhicule, ou relative à un changement de ce sens de déplacement, est également très utile dans des systèmes d'aide au démarrage en côte et d'aide aux manoeuvres à basse vitesse.

Il est pour cela connu d'utiliser des capteurs de rotation, appelés parfois « capteurs signés », qui délivrent, en plus du signal précité, un signal supplémentaire représentatif du sens de rotation de la roue. Mais ces capteurs sont généralement plus onéreux qu'un capteur de type « non signé » (c'est-à-dire délivrant uniquement le signal précité). En outre, de nombreux véhicules déjà en circulation sont équipés seulement de capteurs de rotation « non signés », ce qui ne permet donc pas d'améliorer le fonctionnement des systèmes d'aide au pilotage sans changer les capteurs de rotation.

On connait par ailleurs du document FR 2988850 un procédé de détection du sens de rotation d'une roue utilisant un capteur de rotation « non signé ». Ce procédé tire parti de légères irrégularités de la répartition angulaire des repères, le long de la circonférence de l'élément tournant du capteur de rotation.

Mais ce procédé nécessite une détection et un enregistrement préalable desdites irrégularités (qui sont propres à chaque capteur), ce qui complexifie sa mise en oeuvre.

En outre, lors de ce procédé, il est nécessaire que plusieurs desdits repères passent successivement devant l'élément de détection pour pouvoir déterminer le sens de rotation de la roue. Dans ce procédé, un changement de sens de déplacement du véhicule est donc détecté de manière tardive, en particulier lors d'une conduite à basse vitesse.

### OBJET DE L'INVENTION

Afin de remédier aux inconvénients précités de l'état de la technique, la présente invention propose un procédé selon la revendication 1.

Lorsque le véhicule se déplace dans un sens donné (par exemple vers l'avant), le motif caractéristique apparait successivement par les signaux provenant des différentes roues, dans un ordre chronologique d'apparition donné. A titre d'exemple, le motif caractéristique peut être présenté par ces signaux dans l'ordre chronologique suivant :
- tout d'abord sur le signal provenant du capteur de rotation de la roue avant gauche,
- puis sur le signal provenant du capteur de rotation de la roue arrière droite,
- puis sur le signal provenant du capteur de rotation de la roue avant droite,
- puis sur le signal provenant du capteur de rotation de la roue arrière gauche,
- puis à nouveau sur le signal provenant du capteur de rotation de la roue avant gauche,
et ainsi de suite.

En cas de changement de sens de déplacement du véhicule, cet ordre chronologique d'apparition est modifié (en général il s'inverse), si bien que l'ensemble desdits signaux présente alors une séquence particulière, dont la détection permet de déterminer que le sens de déplacement du véhicule a changé.

Dans ce procédé, on traite donc conjointement plusieurs desdits signaux (ladite séquence de signaux étant relative à un ordre chronologique selon lequel ledit motif apparait, successivement, dans plusieurs desdits signaux), au lieu de les traiter séparément les uns des autres.

Exploiter ainsi de manière conjointe les différentes informations provenant des capteurs de rotation du véhicule permet de détecter un changement de sens de déplacement du véhicule de manière plus simple et plus rapide qu'en traitant ces informations séparément.

D'autres caractéristiques non limitatives et avantageuses du procédé conforme à l'invention, prises individuellement ou selon toutes les combinaisons techniquement possibles, sont les suivantes :
- pour détecter un changement de sens de déplacement du véhicule, on compare la séquence de signaux avec une séquence prédéterminée et mémorisée dans une mémoire informatique ;
- un changement de sens de déplacement du véhicule est détecté lorsque ladite séquence de signaux comprend :
   - une première partie au cours de laquelle ledit motif caractéristique apparait successivement sur lesdits signaux selon un premier ordre chronologique d'apparition, suivie par
   - une deuxième partie au cours de laquelle ledit motif caractéristique apparait successivement sur lesdits signaux selon un deuxième ordre chronologique d'apparition qui est inversé par rapport au premier ordre chronologique d'apparition ;
- un changement de sens de déplacement du véhicule est détecté lorsque, au cours de ladite séquence de signaux, l'un desdits signaux présente deux occurrences successives dudit motif caractéristique, entre lesquelles aucun autre signal ne présente ledit motif caractéristique.

L'invention propose également un véhicule selon la revendication 5.

Les caractéristiques optionnelles présentées plus haut en termes de procédé peuvent aussi s'appliquer au véhicule qui vient d'être décrit.

### DESCRIPTION DETAILLEE D'UN EXEMPLE DE REALISATION

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 représente schématiquement un véhicule automobile dans lequel est mis en oeuvre un procédé de détermination d'un changement de sens de déplacement du véhicule conforme à l'invention,
- la figure 2 représente schématiquement des signaux acquis au cours de ce procédé,
- la figure 3 représente schématiquement l'influence de ces signaux sur le déroulement du procédé, sous la forme d'un diagramme d'états, et
- la figure 4 représente schématiquement un signal de sens de déplacement déterminé au cours dudit procédé.

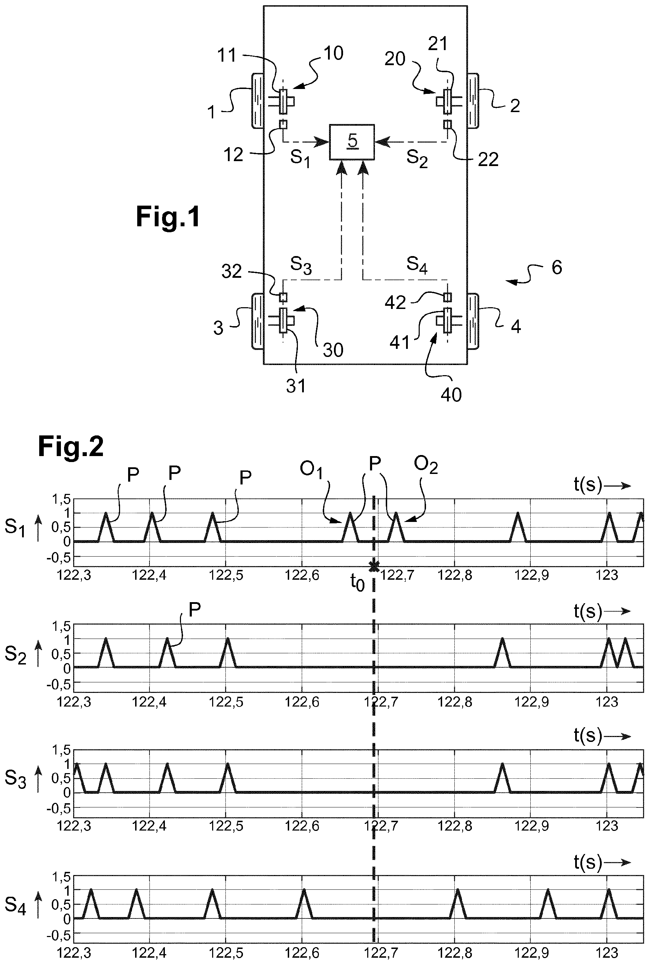

La figure 1 représente schématiquement, vu de dessus, un véhicule 6 automobile comprenant plusieurs roues 1, 2, 3 et 4 (telles que représentées sur la figure 1, ces roues correspondent respectivement aux roues avant gauche, avant droite, arrière gauche, et arrière droite).

Le véhicule comprend également des capteurs de rotation 10, 20, 30 et 40, associés chacun respectivement à l'une desdites roues 1, 2, 3 et 4.

Chaque capteur de rotation 10, 20, 30, 40 comprend :
- une couronne 11, 21, 31, 41 annulaire pourvue d'une pluralité de repères, répartis le long de la circonférence de la couronne en étant décalés angulairement les uns par rapport aux autres, et
- un élément de détection 12, 22, 32, 42 devant lequel lesdits repères passent successivement lors d'un déplacement du véhicule, et qui délivre un signal S₁, S₂, S₃, S₄ qui, au cours du temps, présente un motif caractéristique à chaque passage de l'un desdits repères devant l'élément de détection 11, 21, 31, 41.

Comme illustré sur la figure 2, le motif caractéristique P en question présente ici la forme d'une impulsion.

La couronne 11, 21, 31, 41 annulaire est par exemple fixée à un arbre entrainant la roue du véhicule qui est associée au capteur considéré, tandis que l'élément de détection 12, 22, 32, 42 est fixe par rapport au châssis du véhicule.

Chaque capteur de rotation 10, 20, 30, 40 peut notamment être de type magnétique, la couronne créant alors un champ magnétique dont la valeur varie périodiquement le long de la circonférence de la couronne. Lesdits repères peuvent alors être réalisés sous la forme de dents réparties le long de cette circonférence. Dans ce cas, l'élément de détection est un capteur de champ magnétique, par exemple à effet Hall.

Chaque capteur de rotation 10, 20, 30, 40 peut aussi être de type optique, lesdits repères étant alors réalisés chacun sous la forme d'un couple comprenant deux éléments, l'un transparent et l'autre opaque (ou l'un réfléchissant et l'autre non).

Les repères sont répartis régulièrement le long de la circonférence de la couronne 11, 21, 31, 41 : un écart angulaire, entre deux desdits repères qui se suivent immédiatement, est approximativement constant le long de la circonférence de la couronne.

Les capteurs de rotation 10, 20, 30, 40 sont tels que, lorsque le véhicule se déplace en ligne droite et à vitesse constante, la fréquence temporelle d'apparition du motif caractéristique P est sensiblement la même pour les quatre signaux S₁, S₂, S₃ et S₄ délivrés par les éléments de détection respectifs des capteurs de rotation 10, 20, 30 et 40 (de préférence, cette fréquence d'apparition ne diffère pas de plus de 10% entre deux desdits signaux). Cela est obtenu ici en employant, pour les capteurs de rotation 10, 20, 30, 40, des couronnes 11, 21, 31, 41 qui présentent toutes le même nombre de repères, par exemple égal à 48 (auquel cas l'écart angulaire précité vaut 7,5 degrés environ), ou à 96.

Le véhicule 6 comprend également une unité de traitement 5 électronique, qui comporte au moins un processeur, une mémoire, et des entrées pour acquérir les signaux S₁, S₂, S₃ et S₄ délivrés par les éléments de détection respectifs des capteurs de rotation 10, 20, 30 et 40.

L'unité de traitement 5 peut par exemple être réalisée au moyen d'une unité de commande électronique du véhicule (cette unité de commande étant configurée pour, notamment, piloter différents organes du véhicule de manière à mettre en oeuvre des fonctionnalités d'aide à la conduite, telles qu'une régulation de vitesse, une régulation de distance adaptative, ou encore une fonctionnalité d'anti-dérapage). Lesdits signaux sont alors transmis à cette unité de commande par l'intermédiaire d'un bus CAN du véhicule, par exemple.

De manière remarquable, l'unité de traitement 5 est programmée pour mettre en oeuvre un procédé de détermination d'un changement de sens de déplacement du véhicule, décrit ci-dessous.

Un changement de sens de déplacement du véhicule 6 correspond, pour le véhicule, au passage d'un déplacement vers l'avant à un déplacement vers l'arrière, ou inversement.

L'ordre chronologique d'apparition du motif caractéristique P, successivement sur l'un, puis sur l'autre, puis sur encore un autre desdits signaux (etc...) est modifié en cas de changement de sens de déplacement du véhicule (en général, cet ordre d'apparition s'inverse), comme cela est illustré sur la figure 2.

Cette figure montre schématiquement l'évolution des signaux S₁, S₂, S₃, S₄, au cours du temps t, pour une phase de conduite du véhicule 6 comportant un changement de sens de déplacement. Ce changement de sens déplacement advient au temps tₒ, repéré sur la figure 2 par une ligne verticale (en l'occurrence, tₒ est légèrement inférieur à 122,7 secondes).

Juste avant le changement de sens de déplacement, le motif caractéristique P apparait successivement :
- sur le signal S₃ (provenant du capteur de rotation de la roue 3) et simultanément sur le signal S₂, puis
- sur le signal S₄ (provenant du capteur de rotation de la roue 4) puis
- sur le signal S₁ (provenant du capteur de rotation de la roue 1),
alors que juste après ce changement de sens, le motif caractéristique P apparait successivement :
- sur le signal S₁, puis
- sur le signal S₄, puis
- sur le signal S₃,
soit dans un ordre chronologique d'apparition (143) inversé par rapport l'ordre chronologique d'apparition (341) précédant le changement de sens de déplacement.

Cet exemple illustre qu'un changement de sens de déplacement se traduit, sur les signaux acquis considérés ensemble, par une, et même par plusieurs signatures caractéristiques.

L'une de ces signatures caractéristiques est une inversion de l'ordre chronologique dans lequel le motif caractéristique P apparait successivement sur lesdits signaux. Cette signature correspond en quelque sorte, pour l'évolution temporelle de l'ensemble des signaux S₁, S₂, S₃ et S₄, à une symétrie par rapport à l'instant où advient changement de sens de déplacement (il s'agit d'une sorte d' « effet miroir » pour cet ensemble de signaux).

Une autre de ces signatures est que l'un desdits signaux S₁, S₂, S₃, S₄ présente deux occurrences O₁, O₂ successives du motif caractéristique P, entre lesquelles au moins un autre desdits signaux ne présente pas ledit motif caractéristique P (dans l'exemple de la figure 2, lors du changement de sens, le signal S₁ présente deux occurrences successives du motif caractéristique P, entre lesquelles aucun des autres signaux, S₂, S₃ ou S₄, ne présente ledit motif).

Comme déjà indiqué, lorsque le véhicule se déplace sans changer de sens, le motif caractéristique apparait sur les signaux S₁, S₂, S₃, S₄ sensiblement avec la même période temporelle (sauf éventuellement en cas de virage, de glissement de l'une des roues, ou d'erreur de fonctionnement ponctuelle de l'un des capteurs de rotation). Dans ce cas, entre deux apparitions successives du motif caractéristique P sur l'un desdits signaux, ce motif apparait forcément sur moins un autre desdits signaux (sauf lorsque, par hasard, les motifs caractéristiques apparaissent à un même instant, simultanément sur deux ou plusieurs des signaux - signaux en quelque sorte synchronisés -, ce qui peut advenir de temps en temps).

Ainsi, la signature qui vient d'être décrite, selon laquelle, après une occurrence dudit motif, l'occurrence suivante est observée le signal provenant de la même roue, est observée seulement lors d'un changement de sens de déplacement du véhicule 6 (sauf en cas de synchronisation fortuite des roues). Détecter cette signature permet donc de détecter de manière fiable un tel changement de sens de déplacement.

Le procédé de détermination d'un changement de sens de déplacement est basé sur une détection d'une telle signature caractéristique.

Pour cela, le procédé comprend plus précisément les étapes suivantes :
- acquérir les signaux S₁, S₂, S₃, S₄ délivrés par les éléments de détection des capteurs de rotation 10, 20, 30, 40,
- déterminer une séquence de signaux, ordonnée en fonction de l'apparition des motifs caractéristiques P sur les signaux S₁, S₂, S₃, S₄ acquis, et
- détecter un changement de sens de déplacement du véhicule 6 en fonction de ladite séquence déterminée.

La séquence de signaux correspond à une liste ordonnée identifiant les signaux dans l'ordre chronologique d'apparition des motifs caractéristiques P.

Dans l'exemple de la figure 2, si on considère une partie centrale de la fenêtre temporelle représentée sur cette figure, la séquence de signaux peut être représentée ainsi :
S₃ → S₂ → S₄ → S₁ → S₁ → S₄ → S₃.

La séquence considérée pour déterminer si le véhicule automobile change de sens de circulation devra comporter un nombre d'éléments supérieur ou égal à deux.

La séquence de signaux peut par exemple être constituée par une donnée Sᵢ→Sⱼ indiquant quel est, ou quels sont les signaux acquis sur lesquels ont eu lieu les 2 dernières apparitions (les entiers i et j étant compris chacun entre 1 et 4, ici). Ainsi, par exemple, si les deux dernières apparitions du motif caractéristique P ont eu lieu sur les signaux S₁ et S₃, la séquence déterminée par l'unité de traitement sera : S₁→S₃.

La structure de la séquence de signaux déterminée par l'unité de traitement pourrait être différente de celle donnée ci-dessus. A titre d'exemple, la séquence de signaux pourrait comprendre une donnée indiquant quels sont les signaux acquis sur lesquels ont eu lieu les 6, ou encore 8 dernières apparitions du motif caractéristique P, dans l'ordre successif desdites apparitions. Dans ce cas, si les dernières apparitions du motif caractéristique P ont eu lieu successivement sur les signaux S₁, puis S₃, puis S₂, puis S₄, puis à nouveau S₁, puis S₂, puis la séquence déterminée par l'unité de traitement sera : S₁→S₃→S₂→S₄→S₁→S₂.

Ordonner ladite séquence de signaux en fonction de l'apparition des motifs caractéristiques P sur les signaux acquis rend la séquence ainsi déterminée avantageusement représentative d'un changement de sens de déplacement du véhicule 6.

A titre d'exemple, lorsque la séquence déterminée est de la forme Sᵢ→Sⱼ décrite ci-dessus, si i≠j, c'est qu'il n'y a pas eu de changement de sens de déplacement, alors que si i=j, c'est que le sens de déplacement a changé (cas de la séquence S₁→S₁, ou S₂→S₂, par exemple). En cas de changement de sens de déplacement, une telle séquence de signaux porte donc bien la trace de ce changement de sens.

Dans le mode de réalisation décrit ici, il est prévu plus précisément de détecter un changement de sens de déplacement du véhicule 6 lorsque l'un des signaux S₁, S₂, S₃, S₄ acquis présente deux occurrences successives du motif caractéristique P, entre lesquelles deux autres desdits signaux ne présentent pas ledit motif caractéristique P (par exemple et détecter que, pour une séquence de signaux déterminée de la forme Sᵢ→Sⱼ, i=j).

Grâce à cette disposition, un changement de sens de rotation est détecté très peu de temps après avoir eu lieu. En effet, il ne faut attendre que deux occurrences (c'est-à-dire deux apparitions) successives du motif caractéristique pour être en mesure de détecter un tel changement de sens de déplacement (d'ailleurs, la première occurrence a lieu avant le changement de sens, si bien que, dans ce procédé, le temps de latence de la détection est même inférieur à la durée séparant les deux occurrences successives).

La distance sur laquelle se déplace le véhicule entre l'instant de changement de sens de déplacement, et l'instant de la détection de ce changement s'en trouve ainsi avantageusement réduite, ce qui est particulièrement intéressant dans un système d'aide aux manoeuvres à basse vitesse. En effet, les manoeuvres du véhicule à basse vitesse sont généralement effectuées dans des environnements peu spacieux, laissant peu de latitude de déplacement au véhicule.

La réduction importante du temps de latence de détection obtenue grâce au procédé selon l'invention découle notamment du fait que l'on exploite des propriétés d'ensemble, présentées par un ensemble de plusieurs de ces signaux, au lieu de traiter ces signaux séparément les uns des autres.

Le test mis en oeuvre pour détecter un changement de sens de déplacement porte donc ici sur un ensemble de trois des signaux acquis :
- celui présentant les deux occurrences successives du motif caractéristique P, et
- les deux autres signaux, qui, entre ces deux occurrences, ne présentent pas le motif caractéristique P.

Ce test pourrait aussi porter sur tous les signaux acquis (ici au nombre de 4), et être alors basé sur le critère suivant : l'un des signaux acquis présente deux occurrences successives dudit motif caractéristique, entre lesquelles aucun autre signal ne présente ledit motif caractéristique. En effet, pour le changement de sens de déplacement de la figure 2 par exemple, on constate que, entre les deux occurrences successives présentées par le signal S₁, aucun des autres signaux (S₁, S₂ et S₃) ne présente le signal caractéristique P.

Mais un tel test portant sur tous les signaux acquis s'avère trop contraignant en pratique, tout au moins pour un véhicule à 4 roues. En effet, il n'est pas inhabituel en pratique que, lors d'un changement effectif de sens de déplacement, l'un des signaux présente deux occurrences successives dudit motif, entre lesquelles l'un des autres signaux présente ce motif, par exemple parce que le véhicule tourne fortement, ou du fait d'un glissement de l'une des roues. En employant le test qui porte sur tous les signaux acquis, certains changements de sens de déplacement ne seraient donc pas détectés par l'unité de traitement.

Au contraire, la détection de changement de sens de déplacement pourrait aussi être réalisée au moyen d'un test portant sur deux signaux seulement, en étant basé sur le critère suivant : l'un des signaux acquis présente deux occurrences successives dudit motif caractéristique, entre lesquelles l'un des autres signaux acquis ne présente pas ledit motif caractéristique. Mais un tel test s'avère trop peu contraignant en pratique, conduisant assez fréquemment à des détections de changement de sens de déplacement du véhicule alors que celui-ci n'a en réalité par changé de sens de déplacement (c'est-à-dire à des détections erronées).

Par ailleurs, pour améliorer encore la robustesse de détection du procédé, il est prévu, lorsque :
- l'un des signaux S₁, S₂, S₃, S₄ acquis présente deux occurrences successives du motif caractéristique P, entre lesquelles deux autres desdits signaux ne présentent pas ledit motif caractéristique P,
- mais qu'un autre des signaux acquis présente lui aussi le motif caractéristique P, en même temps que la première de deux occurrences précitée,
de ne pas détecter de changement de sens de déplacement du véhicule.

Autrement formulé, si deux des signaux S₁, S₂, S₃, S₄ acquis présentent chacun, au même instant, le motif caractéristique P, l'apparition suivante de ce motif n'est pas prise en compte pour détecter un changement de sens de déplacement. Cette disposition permet s'écarter les situations dans lesquelles deux desdits signaux se trouveraient fortuitement synchronisés ensemble.

Le test mis en oeuvre ici pour détecter un changement de sens de circulation, qui porte sur trois des signaux acquis, est réalisé pour chaque sous-ensemble de trois signaux choisis parmi les quatre signaux S₁, S₂, S₃, S₄ acquis. Il est donc réalisé en parallèle pour :
- le sous-ensemble de signaux G₁₂₃, qui comprend les signaux S₁, S₂ et S₃,
- le sous-ensemble de signaux G₁₂₄, qui comprend les signaux S₁, S₂ et S₄,
- le sous-ensemble de signaux G₂₃₄, qui comprend les signaux S₂, S₃ et S₄, et pour
- le sous-ensemble de signaux G₁₃₄, qui comprend les signaux S₁, S₃ et S₄.

On considère que le sens de déplacement du véhicule a changé dès que l'un de ces sous-ensembles de signaux présente la séquence particulière mentionnée plus haut (deux occurrences successives du motif caractéristique sur un signal, entre lesquelles les deux autres signaux du sous-ensemble ne présentent pas ledit motif caractéristique).

Réaliser ce test pour chaque sous-ensemble de trois signaux choisis parmi les différents signaux acquis augmente la sensibilité de détection du procédé.

Dans le mode de réalisation décrit ici, la détection de changement de sens de déplacement est mise en oeuvre au moyens de quatre modules de détection M₁₂₃, M₁₂₄, M₂₃₄, et M₁₃₄, dédiés respectivement aux quatre ensembles de signaux G₁₂₃, G₁₂₄, G₂₃₄, et G₁₃₄.

Chacun de ces modules est réalisé sous la forme d'une « machine d'état » (automate à nombre fini d'états).

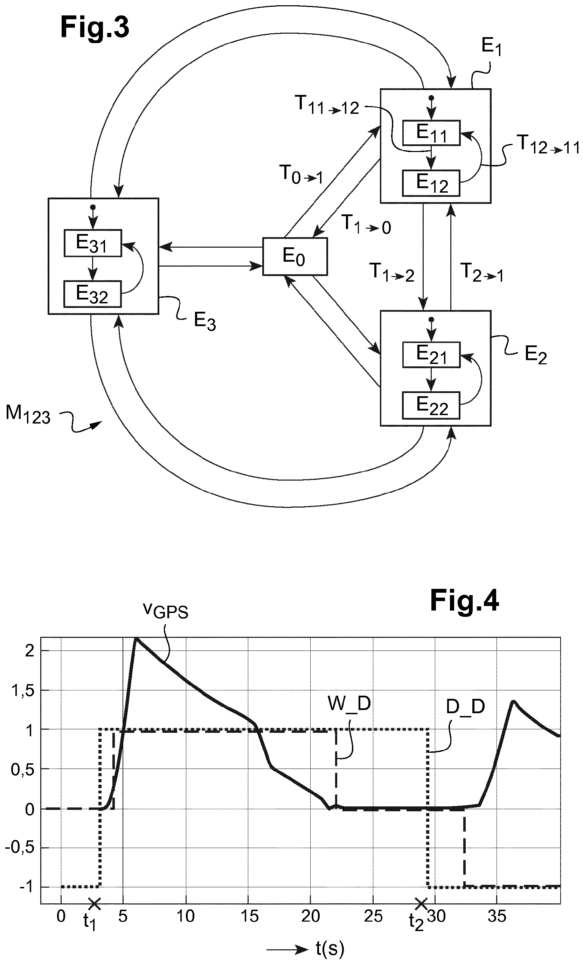

La figure 3 représente schématiquement le module de détection M₁₂₃, basé sur les états suivants :
- un état initial E_{O},
- un premier état E₁, dans lequel se trouve cette machine d'états lorsque la dernière apparition du motif caractéristique a eu lieu sur le signal S₁,
- un deuxième état E₂, dans lequel se trouve la machine d'états lorsque la dernière apparition du motif caractéristique a eu lieu sur le signal S₂, et
- un troisième état E₃, dans lequel se trouve la machine d'états lorsque la dernière apparition du motif caractéristique a eu lieu sur le signal S₃

Les premier, deuxième et troisième états E₁, E₂ et E₃ comprennent chacun deux sous-états, notés respectivement E₁₁ et E₁₂, E₂₁ et E₂₂, et E₃₁ et E₃₂

La transition *T*_{0→1} , de l'état initial E_{O} vers le premier état E₁, est effectuée en cas de détection du motif caractéristique P sur le signal S₁ (sans apparition simultanée de ce motif sur l'un des autres signaux S₂ et S₃). Plus précisément, après cette transition, la machine est dans le premier sous-état E₁₁ du premier état E₁.

La transition *T*_{1→0} , du premier état E₁ vers l'état initial E_{O}, est effectuée en cas de détection simultanée du motif caractéristique P sur plusieurs des signaux S₁, S₂ et S₃.

La transition *T*_{11→12} , du premier E₁₁ au deuxième sous-état E₁₂ de l'état E₁, est effectuée lorsque le motif caractéristique P est détecté sur le signal S₁. Dans le deuxième sous-état E₁₂ de l'état E₁, un signal de détection de changement de sens de déplacement est émis.

La transition *T*_{12→11} , du deuxième E₁₂ au premier E₁₁ sous-état de l'état E₁, est effectuée dès qu'un pas de temps s'est écoulé.

La transition *T*_{1→2}, du premier état E₁ vers le deuxième état E₂, est effectuée en cas de détection du motif caractéristique P sur le signal S₂ (sans apparition simultanée de ce motif sur l'un des autres signaux S₁ et S₃). Plus précisément, après cette transition, la machine est dans le premier sous-état E₂₁ du deuxième état E₂.

La transition *T*_{2→1}, du deuxième état E₂ vers le premier état E₁, est effectuée en cas de détection du motif caractéristique P sur le signal S₁ (sans apparition simultanée de ce motif sur l'un des autres signaux).

Les autres transitions entre états ou sous-états se font de manière comparable.

A titre d'exemple, si le motif caractéristique apparait successivement sur les signaux S₁, puis S₂, puis S₃, puis S₁, puis S₂, puis S₂ à nouveau, la machine se trouve successivement dans les état suivants : E₁₁, puis E₂₁, puis E₃₁, puis E₁₁ à nouveau, puis E₂₁, puis E₂₂ (détection de changement de sens de déplacement).

La structure des trois autres modules de détection M₁₂₄, M₂₃₄, et M₁₃₄ est comparable à celle du module de détection M₁₂₃, qui vient d'être décrit.

Au cours du procédé, il est prévu non seulement de détecter un changement de sens de déplacement du véhicule, mais aussi mettre à jour une variable représentative du sens de déplacement du véhicule à chaque détection de changement de sens de déplacement.

Cette variable D_D présente par exemple la valeur 1 pour un déplacement vers l'avant, et -1 pour un déplacement vers l'arrière, et bascule de l'une à l'autre de ces valeurs à chaque détection de changement de sens de déplacement.

La valeur de variable D_D peut être initialisée (et éventuellement réinitialisée régulièrement) à partir d'une donnée W_D, relative au sens de déplacement du véhicule, déterminée par ailleurs.

La donnée W_D peut par exemple déterminée au moyen du procédé décrit dans le document FR 2988850, et tenir compte éventuellement d'infirmations supplémentaires relatives par exemple à la position d'un levier de commande de boite à vitesses. Cette donnée W_D présente la valeur 1 pour un déplacement vers l'avant, -1 pour un déplacement vers l'arrière, et 0 lorsque le véhicule 6 est considéré à l'arrêt.

La figure 4 représente schématiquement l'évolution au cours du temps t de :
- la variable D_D déterminée grâce au présent procédé,
- la donnée W_D précitée, et
- d'une vitesse v_{GPS} du véhicule 6 déterminée au moyen notamment d'un système de positionnement GPS,
pour un exemple de phase de conduite du véhicule 6.

La vitesse v_{GPS} correspond à la norme de la vitesse du véhicule (elle est toujours positive, même en marche arrière).

La phase de conduite de la figure 4 comprend deux changements de sens de déplacement, à un premier instant t₁ (égal à 2,5 secondes environ), et à un deuxième instant t₂ (égal à 29 secondes environ).

Comme on le constate sur cet exemple, le procédé selon l'invention permet de détecter ces deux changements de sens de déplacement peu de temps après qu'ils aient eu lieu, et ce alors que la vitesse de déplacement du véhicule est encore faible. En particulier, ces deux détections adviennent avant celles obtenues via le signal W_D.

Différentes variantes peuvent être apportées au procédé qui vient d'être décrit.

Par exemple, au lieu de conserver en mémoire le dernier signal ayant présenté le motif caractéristique, et de détecter un changement de sens si l'apparition suivante du motif caractéristique a lieu sur ce même signal, la détection de changement de sens pourrait être basée sur une comparaison entre :
- la séquence de signaux déterminée, de la forme Sᵢ→Sⱼ, et
- une ou plusieurs séquences de signaux prédéterminées (S₁→S₁,
S₂→S₂, ...) et mémorisées dans la mémoire de l'unité de traitement.

Cette détection pourrait aussi être basée sur l'identification du fait que la séquence déterminée, de la forme Sᵢ→Sⱼ→Sₖ→Sₗ→Sₘ→Sₙ, comprend :
- une première partie Sᵢ→Sⱼ→Sₖ au cours de laquelle ledit motif caractéristique apparait alternativement sur lesdits signaux selon un premier ordre chronologique d'apparition (ijk), suivie par
- une deuxième partie Sₗ→Sₘ→Sₙ au cours de laquelle ledit motif caractéristique apparait alternativement sur lesdits signaux selon un deuxième ordre chronologique d'apparition (Imn, avec l=k, m=j, n=i, soit kji) qui est inversé par rapport au premier ordre chronologique d'apparition (ijk). Cette dernière solution entraîne toutefois une augmentation du temps de latence de détection par rapport au mode de réalisation décrit plus haut.

## Revendications

1. Procédé de détermination d'un changement de sens de déplacement d'un véhicule (6), le véhicule (6) comprenant au moins quatre roues (1, 2, 3, 4) et au moins quatre capteurs de rotation (10, 20, 30, 40) associés chacun respectivement à l'une desdites roues (1, 2, 3, 4), chaque capteur de rotation comprenant :
- une couronne (11, 21, 31, 41) annulaire pourvue d'une pluralité de repères, répartis le long de la circonférence de la couronne en étant décalés angulairement les uns par rapport aux autres, et
- un élément de détection (12, 22, 32, 42) devant lequel lesdits repères passent successivement lors d'un déplacement du véhicule et qui délivre un signal (S₁, S₂, S₃, S₄) qui, au cours du temps, présente un motif caractéristique (P) à chaque passage de l'un desdits repères devant l'élément de détection (12, 22, 32, 42),
le procédé comprenant l'étape suivante :
- acquérir les signaux (S₁, S₂, S₃, S₄) délivrés par les éléments de détection des capteurs de rotation (10, 20, 30, 40),
**caractérisé en ce que** le procédé comprend en outre les étapes suivantes, exécutées pour plusieurs sous-ensembles (G₁₂₃, G₁₂₄, G₂₃₄, G₁₃₄) de signaux acquis comprenant chacun trois desdits signaux (S₁, S₂, S₃, S₄) :
- déterminer une séquence de signaux, ordonnée selon l'ordre chronologique d'apparition des motifs caractéristiques (P) dans les signaux acquis du sous-ensemble (G₁₂₃, G₁₂₄, G₂₃₄, G₁₃₄) considéré, et
- détecter un changement de sens de déplacement du véhicule (6) en fonction de la séquence de signaux déterminée pour le sous-ensemble (G₁₂₃, G₁₂₄, G₂₃₄, G₁₃₄) considéré.

2. Procédé selon la revendication 1, dans lequel, pour chacun desdits sous-ensembles (G₁₂₃, G₁₂₄, G₂₃₄, G₁₃₄) de signaux acquis, l'étape de détection est réalisée en comparant la séquence de signaux déterminée pour ce sous-ensemble avec une séquence prédéterminée (S₁→S₁, S₂→S₂) et mémorisée dans une mémoire informatique.

3. Procédé selon l'une des revendications 1 ou 2, dans lequel, pour chacun desdits sous-ensembles (G₁₂₃, G₁₂₄, G₂₃₄, G₁₃₄) de signaux acquis, un changement de sens de déplacement du véhicule (6) est détecté lorsque la séquence de signaux déterminée pour ce sous-ensemble comprend :
- une première partie (Sᵢ→Sⱼ→Sₖ) au cours de laquelle ledit motif caractéristique (P) apparait successivement sur lesdits signaux selon un premier ordre chronologique d'apparition (ijk), suivie par
- une deuxième partie (Sₗ→Sₘ→Sₙ) au cours de laquelle ledit motif caractéristique (P) apparait successivement sur lesdits signaux selon un deuxième ordre chronologique d'apparition (Imn) qui est inversé par rapport au premier ordre chronologique d'apparition (ijk).

4. Procédé selon l'une des revendications 1 à 3, dans lequel, pour chacun desdits sous-ensembles (G₁₂₃, G₁₂₄, G₂₃₄, G₁₃₄) de signaux acquis, un changement de sens de déplacement du véhicule (6) est détecté lorsque, au cours de la séquence de signaux déterminée pour ce sous-ensemble, l'un desdits signaux (S₁, S₂, S₃, S₄) présente deux occurrences (O₁, O₂) successives dudit motif caractéristique (P), entre lesquelles aucun autre signal (S₁, S₂, S₃, S₄) du sous-ensemble (G₁₂₃, G₁₂₄, G₂₃₄, G₁₃₄) considéré ne présente ledit motif caractéristique (P).

5. Véhicule (6) comprenant :
- au moins quatre roues (1, 2, 3, 4),
- au moins quatre capteurs de rotation (10, 20, 30, 40) associés chacun respectivement à l'une desdites roues (1, 2, 3, 4), chaque capteur de rotation comprenant :
- une couronne annulaire pourvue d'une pluralité de repères, répartis le long de la circonférence de la couronne en étant décalés angulairement les uns par rapport aux autres, et
- un élément de détection devant lequel lesdits repères passent successivement lors d'un déplacement du véhicule et qui délivre un signal (S₁, S₂, S₃, S₄) qui, au cours du temps, présente un motif caractéristique (P) à chaque passage de l'un desdits repères devant l'élément de détection,
le véhicule comprenant en outre une unité de traitement (5) électronique programmée pour exécuter l'étape suivante :
- acquérir les signaux (S₁, S₂, S₃, S₄) délivrés par les éléments de détection des capteurs de rotation (10, 20, 30, 40),
**caractérisé en ce que** l'unité de traitement est programmée en outre pour, pour plusieurs sous-ensembles (G₁₂₃, G₁₂₄, G₂₃₄, G₁₃₄) de signaux acquis comprenant chacun trois desdits signaux (S₁, S₂, S₃, S₄) :
- déterminer une séquence de signaux, ordonnée selon l'ordre chronologique d'apparition des motifs caractéristiques (P) dans les signaux acquis du sous-ensemble (G₁₂₃, G₁₂₄, G₂₃₄, G₁₃₄) considéré, et
- détecter un changement de sens de déplacement du véhicule (6) en fonction de la séquence de signaux déterminée pour le sous-ensemble (G₁₂₃, G₁₂₄, G₂₃₄, G₁₃₄) considéré.

## Patentansprüche

1. Verfahren zur Bestimmung einer Fahrtrichtungsänderung eines Fahrzeugs (6), wobei das Fahrzeug (6) mindestens vier Räder (1, 2, 3, 4) und mindestens vier Rotationssensoren (10, 20, 30, 40), die jeder jeweils mit einem der Räder (1, 2, 3, 4) assoziiert sind, beinhaltet, wobei jeder Rotationssensor Folgendes beinhaltet:
- einen ringförmigen Kranz (11, 21, 31, 41), der über eine Vielzahl von Markierungen verfügt, die am Umfang des Kranzes verteilt und winkelförmig zueinander versetzt sind, und
- ein Detektionselement (12, 22, 32, 42), vor dem die Markierungen während einer Fahrt des Fahrzeugs nacheinander vorbeigehen und das ein Signal (S₁, S₂, S₃, S₄) liefert, das im Verlauf der Zeit bei jedem Vorbeigehen einer der Markierungen vor dem Detektionselement (12, 22, 32, 42) ein charakteristisches Muster (P) aufweist, wobei das Verfahren den folgenden Schritt beinhaltet:
- Erfassen der Signale (S₁, S₂, S₃, S₄), die durch die Detektionselemente der Rotationssensoren (10, 20, 30, 40) geliefert werden,
**dadurch gekennzeichnet, dass** das Verfahren ferner die folgenden Schritte beinhaltet, die für mehrere Teilsätze (G₁₂₃, G₁₂₄, G₂₃₄, G₁₃₄) von erfassten Signalen ausgeführt werden, die jeweils drei der Signale (S₁, S₂, S₃, S₄) beinhalten:
- Bestimmen einer Signalsequenz, die gemäß der chronologischen Reihenfolge des Erscheinens der charakteristischen Muster (P) in den erfassten Signalen des betrachteten Teilsatzes (G₁₂₃, G₁₂₄, G₂₃₄, G₁₃₄) geordnet ist, und
- Detektieren einer Fahrtrichtungsänderung des Fahrzeugs (6) in Abhängigkeit von der für den betrachteten Teilsatz (G₁₂₃, G₁₂₄, G₂₃₄, G₁₃₄) bestimmten Signalsequenz.

2. Verfahren nach Anspruch 1, wobei für jeden der Teilsätze (G₁₂₃, G₁₂₄, G₂₃₄, G₁₃₄) von erfassten Signalen der Schritt des Detektierens durchgeführt wird, indem die für diesen Teilsatz bestimmte Signalsequenz mit einer in einem Computerspeicher gespeicherten vorgegebenen Sequenz (S₁→S₁, S₂→S₂) verglichen wird.

3. Verfahren nach einem der Ansprüche 1 oder 2, wobei für jeden der Teilsätze (G₁₂₃, G₁₂₄, G₂₃₄, G₁₃₄) von erfassten Signalen eine Fahrtrichtungsänderung des Fahrzeugs (6) detektiert wird, wenn die für diesen Teilsatz bestimmte Signalsequenz Folgendes beinhaltet:
- einen ersten Abschnitt (Sᵢ→Sⱼ→Sₖ), während dem das charakteristische Muster (P) gemäß einer ersten chronologischen Reihenfolge des Erscheinens (ijk) nacheinander in den Signalen erscheint, gefolgt von
- einem zweiten Abschnitt (Sₗ→Sₘ→Sₙ) , während dem das charakteristische Muster (P) gemäß einer zweiten chronologischen Reihenfolge des Erscheinens (lmn), die mit Bezug auf die erste chronologische Reihenfolge des Erscheinens (ijk) umgekehrt ist, nacheinander in den Signalen erscheint.

4. Verfahren nach einem der Ansprüche 1 bis 3, wobei für jeden der Teilsätze (G₁₂₃, G₁₂₄, G₂₃₄, G₁₃₄) von erfassten Signalen eine Fahrtrichtungsänderung des Fahrzeugs (6) detektiert wird, wenn während der für diesen Teilsatz bestimmten Signalsequenz eines der Signale (S₁, S₂, S₃, S₄) ein zweimaliges aufeinanderfolgendes Auftreten (O₁, O₂) des charakteristischen Musters (P) aufweist und zwischen diesen beiden kein anderes Signal (S₁, S₂, S₃, S₄) des betrachteten Teilsatzes (G₁₂₃, G₁₂₄, G₂₃₄, G₁₃₄) das charakteristische Muster (P) aufweist.

5. Fahrzeug (6), das Folgendes beinhaltet:
- mindestens vier Räder (1, 2, 3, 4),
- mindestens vier Rotationssensoren (10, 20, 30, 40), die jeder jeweils mit einem der Räder (1, 2, 3, 4) assoziiert sind, wobei jeder Rotationssensor Folgendes beinhaltet:
- einen ringförmigen Kranz, der über eine Vielzahl von Markierungen verfügt, die am Umfang des Kranzes verteilt und winkelförmig zueinander versetzt sind, und
- ein Detektionselement, vor dem die Markierungen während einer Fahrt des Fahrzeugs nacheinander vorbeigehen und das ein Signal (S₁, S₂, S₃, S₄) liefert, das im Verlauf der Zeit bei jedem Vorbeigehen einer der Markierungen vor dem Detektionselement ein charakteristisches Muster (P) aufweist,
wobei das Fahrzeug ferner eine elektronische Verarbeitungseinheit (5) aufweist, die dazu programmiert ist, den folgenden Schritt auszuführen:
- Erfassen der Signale (S₁, S₂, S₃, S₄), die durch die Detektionselemente der Rotationssensoren (10, 20, 30, 40) geliefert werden,
**dadurch gekennzeichnet, dass** die Verarbeitungseinheit ferner dazu programmiert ist, für mehrere Teilsätze (G₁₂₃, G₁₂₄, G₂₃₄, G₁₃₄) von erfassten Signalen, die jeweils drei der Signale (S₁, S₂, S₃, S₄) beinhalten:
- eine Signalsequenz zu bestimmen, die gemäß der chronologischen Reihenfolge des Erscheinens der charakteristischen Muster (P) in den erfassten Signalen des betrachteten Teilsatzes (G₁₂₃, G₁₂₄, G₂₃₄, G₁₃₄) geordnet ist, und
- eine Fahrtrichtungsänderung des Fahrzeugs (6) in Abhängigkeit von der für den betrachteten Teilsatz (G₁₂₃, G₁₂₄, G₂₃₄, G₁₃₄) bestimmten Signalsequenz zu detektieren.

## Claims

1. Method for determining a change in the direction of movement of a vehicle (6), the vehicle (6) comprising at least four wheels (1, 2, 3, 4) and at least four rotation sensors (10, 20, 30, 40) that are each respectively associated with one of said wheels (1, 2, 3, 4), each rotation sensor comprising:
- an annular ring (11, 21, 31, 41) provided with a plurality of markers, which are distributed around the circumference of the ring and are angularly offset with respect to one another, and
- a detecting element (12, 22, 32, 42) in front of which said markers successively pass during a movement of the vehicle and that delivers a signal (S₁, S₂, S₃, S₄) that, over time, presents a characteristic pattern (P) on each passage of one of said markers in front of the detecting element (12, 22, 32, 42),
the method comprising the following step:
- acquiring the signals (S₁, S₂, S₃, S₄) delivered by the detecting elements of the rotation sensors (10, 20, 30, 40),
**characterized in that** the method furthermore comprises the following steps, which are executed for a plurality of subsets (G₁₂₃, G₁₂₄, G₂₃₄, G₁₃₄) of acquired signals each comprising three of said signals (S₁, S₂, S₃, S₄) :
- determining a succession of signals, said succession being ordered in the chronological order of appearance of the characteristic patterns (P) in the acquired signals of the subset (G₁₂₃, G₁₂₄, G₂₃₄, G₁₃₄) in question, and
- detecting a change in the direction of movement of the vehicle (6) depending on the succession of signals that is determined for the subset (G₁₂₃, G₁₂₄, G₂₃₄, G₁₃₄) in question.

2. Method according to Claim 1, wherein, for each of said subsets (G₁₂₃, G₁₂₄, G₂₃₄, G₁₃₄) of acquired signals, the detecting step is carried out by comparing the succession of signals that is determined for this subset with a predefined succession (S₁→S₁, S₂→S₂) stored in a computer memory.

3. Method according to either of Claims 1 and 2, wherein, for each of said subsets (G₁₂₃, G₁₂₄, G₂₃₄, G₁₃₄) of acquired signals, a change in the direction of movement of the vehicle (6) is detected when the succession of signals that is determined for this subset comprises:
- a first portion (Sᵢ→Sⱼ→Sₖ) during which said characteristic pattern (P) appears successively in said signals in a first chronological order of appearance (ijk), followed by
- a second portion (Sₗ→Sₘ→Sₙ) during which said characteristic pattern (P) appears successively in said signals in a second chronological order of appearance (lmn) that is inverted with respect to the first chronological order of appearance (ijk).

4. Method according to one of Claims 1 to 3, wherein, for each of said subsets (G₁₂₃, G₁₂₄, G₂₃₄, G₁₃₄) of acquired signals, a change in the direction of movement of the vehicle (6) is detected when, during the succession of signals that is determined for this subset, one of said signals (S₁, S₂, S₃, S₄) presents two successive occurrences (O₁, O₂) of said characteristic pattern (P), between which occurrences no other signal (S₁, S₂, S₃, S₄) of the subset (G₁₂₃, G₁₂₄, G₂₃₄, G₁₃₄) in question presents said characteristic pattern (P).

5. Vehicle (6) comprising:
- at least four wheels (1, 2, 3, 4),
- at least four rotation sensors (10, 20, 30, 40) each respectively associated with one of said wheels (1, 2, 3, 4), each rotation sensor comprising:
- an annular ring provided with a plurality of markers, which are distributed around the circumference of the ring and are angularly offset with respect to one another, and
- a detecting element in front of which said markers successively pass during a movement of the vehicle and that delivers a signal (S₁, S₂, S₃, S₄) that, over time, presents a characteristic pattern (P) on each passage of one of said markers in front of the detecting element,
the vehicle furthermore comprising an electronic processing unit (5) programmed to execute the following step:
- acquiring the signals (S₁, S₂, S₃, S₄) delivered by the detecting elements of the rotation sensors (10, 20, 30, 40),
**characterized in that** the processing unit is furthermore programmed to, for a plurality of subsets (G₁₂₃, G₁₂₄, G₂₃₄, G₁₃₄) of acquired signals each comprising three of said signals (S₁, S₂, S₃, S₄):
- determine a succession of signals, said succession being ordered in the chronological order of appearance of the characteristic patterns (P) in the acquired signals of the subset (G₁₂₃, G₁₂₄, G₂₃₄, G₁₃₄) in question, and
- detect a change in the direction of movement of the vehicle (6) depending on the succession of signals that is determined for the subset (G₁₂₃, G₁₂₄, G₂₃₄, G₁₃₄) in question.
